# EUROPEAN PATENT APPLICATION

(11) **EP 1 884 354 A1**
(43) Date of publication of application: **06.02.2008**
(21) Application number: 06756348.6
(22) Date of filing: 18.05.2006
(51) Int. Cl.: B32B 27/00, C08J 7/04

(54) **CONDUCTIVE POLYMER MULTILAYER BODY**

(30) Priority: 27.05.2005 JP 2005156298
(71) Applicant: IDEMITSU KOSAN CO., LTD., Tokyo 100-8321 (JP)
(72) Inventor: TAKEUCHI, Mizutomo, 2990293 (JP); KURAMOTO, Noriyuki, 9920062 (JP)
(74) Representative: Gille Hrabal Struck Neidlein Prop Roos
(86) International application number: PCT/JP2006/309943
(87) International publication number: WO 2006/126448

(57) **Abstract**

A conductive polymer multilayer body including a substrate and a thin film provided thereon with a thickness of 1 µm or less which is formed of a conductive polyaniline composition containing a protonated substituted or unsubstituted polyaniline composite (a) dissolved in an organic solvent which is substantially immiscible with water and a compound having a phenolic hydroxyl group (b).

## Description

### TECHNICAL FIELD

The invention relates to a conductive polymer multilayer body having, on at least one surface of a substrate, a thin film of a conductive polyaniline composition.

### BACKGROUND

A film or sheet of thermoplastics such as polyester, nylon, polysulfone, and polycarbonate is used in large quantities and in a wide variety of fields, for example, as conductive films used in electric or electronic products, packaging films for packaging ICs, foodstuff or the like, and industrial films, since it is excellent in heat resistance, dimensional stability, mechanical strength, or the like. Polyethylene, polypropylene, or the like are poor in heat resistance, but are widely used as a packaging material since they can be molded readily and produced at a low cost. A cyclic olefin polymer is used as a substrate of a touch panel, an anti-reflective film, or the like since it is excellent in heat resistance, dimensional stability at high temperature and high humidity, and optical characteristics such as transparency and low birefringence.

These synthetic resins are normally hydrophobic. Therefore, static electricity tends to be generated on the surface of a molded article formed of the synthetic resin, and as a result, dust is likely to be adhered thereto. Surfactants are generally used as an antistatic agent to suppress adhesion of dust to a film, a packaging material, or the like. However, it is difficult to obtain a surface resistance of 10¹⁰ Ω/□ or less which is required to suppress generation of static electricity. Packaging films for ICs, semiconductors, or the like are required to have a surface resistance of 10⁵ to 10¹² Ω/□ to protect electronic equipment or components from troubles caused by static electricity. In such a case, static electricity is normally suppressed by depositing a metal such as aluminum on a film or sheet. As a result, the film or sheet becomes opaque, causing such problems as invisible contents of the package. A conductive film used for an electrode of a touch panel or the like is required to have not only a low surface resistance of 10³ Ω/□ or less but also high optical characteristics. Therefore, a conductive film of an inorganic oxide such as ITO has been used.

As a material having a surface resistance which is low enough to be used as antistatic agent, attempts have been made to use conductive polymers such as polyaniline, polypyrrol, and polythiophene. Among them, polyaniline has, in addition to its excellent electric characteristics, advantages and characteristics of being synthesized by a comparatively simple process from inexpensive raw material aniline and possessing excellent dimensional stability in the air and the like, even in the state of exhibiting conductivity. Generally, conductive polymers are not only insoluble in water or organic solvents but also are not molten. Therefore, use of a conductive polymer which exhibits increased affinity to water or organic solvents has been proposed, which is prepared by introducing a water-soluble substituent (sulfonic acid group, for example) or a hydrophobic long-chain aliphatic group into the skeleton of the conductive polymer.

Generally, conductive polymers have poor moldability. Therefore, to make the surface of a substrate conductive, a method has been proposed in which a conductive polymer is produced and applied to the surface of a substrate or the like by a chemical or electrochemical method. This method, however, is not flexible since it cannot be applied to a substrate with an unusual shape, for example.

Conventional conductive polymers have poor inherent electric properties (intrinsic conductivity, in particular). Therefore, if the conventional polymers are used, only conductive products with a high surface resistance value can be obtained (Patent Document 1, for example). To decrease the surface resistivity, the thickness of a conductive polymer layer is required to be thick, which results in a lowered transmittance to rays, i.e., deteriorated transparency.

On the other hand, Non-patent Document 1 states that a conductive polyaniline (so-called emeraldine salt) produced by doping a non-conductive polyaniline (so-called emeraldine base) with dodecylbenzenesulfonic acid, camphorsulfonic acid (CSA), or the like using a compound having a phenolic hydroxyl group, particularly m-cresol as a solvent, exhibits high conductivity. However, because the compound having a phenolic hydroxyl group is a solvent and the conductive polyaniline has a low solubility, a large amount of a compound having a phenolic hydroxyl group is required to produce a conductive material. Since the compound having a phenolic hydroxyl group such as m-cresol has a high boiling point, a large amount of energy is required to make conductive polyaniline a solid for use as a material.

Patent Document 1: JP-A-2003-342481
Non-patent document 1: Synthetic metals, 48, 1992, pp. 91-97. .

An object of the invention is to provide a conductive polymer multilayer body having a low surface resistivity and a high degree of transparency.

### SUMMARY OF THE INVENTION

The inventors made extensive studies to attain the above object, and have found that a specific composite of a polyaniline and a protonic acid is soluble in an organic solvent, and that a multilayer body obtained by coating a substrate with a composition prepared by adding a small amount of a compound having a phenolic hydroxyl group to the composite in the state of being dissolved in the organic solvent exhibits remarkably improved electric characteristics such as electric conductivity. The invention has been made based on these findings.

The inventor has also found that a highly transparent conductive multilayer body can be obtained when applying this composition to a substrate, and that this composition can be uniformly applied even to a low polarity substrate surface. The invention has been completed based on these findings.

The invention provides the following conductive polymer multilayer body.
1. A conductive polymer multilayer body comprising a substrate and a thin film provided thereon with a thickness of 1 µm or less which is formed of a conductive polyaniline composition containing a protonated substituted or unsubstituted polyaniline composite (a) dissolved in an organic solvent which is substantially immiscible with water and a compound having a phenolic hydroxyl group (b).
2. A conductive polymer multilayer body comprising a substrate having a surface with a low polarity and a thin film provided thereon with a thickness of 1 µm or less which is formed of a conductive polyaniline composition containing a protonated substituted or unsubstituted polyaniline composite (a) dissolved in an organic solvent which is substantially immiscible with water and a compound having a phenolic hydroxyl group (b).
3. The conductive polymer multilayer body according to 1 or 2 which has an intrinsic surface resistance of 10¹⁰ Ω/□ or less.
4. The conductive polymer multilayer body according to 3 which has an intrinsic surface resistance of 10⁵ Ω/□ or less.
5. The conductive polymer multilayer body according to any one of 1 to 4 which has a transmittance to entire rays of 80% or more.
6. The conductive multilayer body according to any one of 1 to 5, wherein the conductive polyaniline composition contains a binder resin and/or a curable resin monomer.

According to the invention, a conductive polymer multilayer body with a low surface resistivity and a high degree of transparency can be provided.

### BRIEF DESCRIPTION OF THE DRAWINGS

FIG. 1 is a UV-vis (ultraviolet-visible ray) spectrum of a thin film produced from a composition containing a phenolic compound (b); and
FIG. 2 is a UV-vis (ultravilet-visible ray) spectrum of a thin film produced from a polyaniline composite (a) dissolved in an organic solvent, which does not contain a phenolic compound (b).

### BEST MODE FOR CARRYING OUT THE INVENTION

The invention will be described in detail.
The conductive polymer multilayer body of the invention comprises a substrate and a thin film provided thereon which is formed of a specific conductive polyaniline composition. The thickness of this thin film is preferably 1 µm or less, more preferably 200 nm or less. The lower limit is normally 1 nm or more, but not limited thereto.
The conductive polyaniline composition (hereinafter abbreviated as "composition") contains a protonated substituted or unsubstituted polyaniline composite (a) dissolved in an organic solvent which is substantially immiscible with water and a compound having a phenolic hydroxyl group (b).

The conductive polyaniline composition is preferably prepared by a method of producing a conductive polyaniline composition comprising the step (i) of subjecting a substituted or unsubstituted aniline to chemical-oxidation polymerization in the presence of a protonic acid or salt thereof represented by the following formula (I) in an organic solvent which is immiscible with water:

M(XARₙ)ₘ (I)

wherein M is a hydrogen atom, or an organic or inorganic cation;
X is an acidic group;
A is a hydrocarbon group which may have a substituent;
R is independently -R¹, -OR¹, -COR¹, -COOR¹, -CO(COR¹), or - CO(COOR¹) (wherein R¹ is a hydrocarbon group with 4 or more carbon atoms which may have a substituent, silyl group, alkylsilyl group, -(R²O)ₓ-R³, or -(OSiR³₂)ₓ-OR³ (wherein R² is an alkylene group, R³s, which may be the same or different, are a hydrocarbon group, and x is an integer of 1 or more);
n is an integer of 2 or more; and
m is a valence of M, to obtain (a) a protonated substituted or unsubstituted polyaniline composite which is soluble in the organic solvent; and the step (ii) of adding (b) a compound having a phenolic hydroxyl group to the (a) protonated substituted or unsubstituted polyaniline composite dissolved in the organic solvent which is substantially immiscible with water.

The compound (b) having a phenolic hydroxyl group (hereinafter referred to as "phenolic compound (b)") used in the composition is not specifically limited and is shown by the general formula of ArOH (wherein Ar is an aryl group or a substituted aryl group). Specific examples include phenol; substituted phenols such as o-, m-, or p-cresol, o-, m-, or p-ethylphenol, o-, m-, or p-propylphenol, o-, m-, or p-butylphenol, o-, m-, or p-chlorophenol, salicylic acid, hydroxybenzoic acid, and hydroxynaphthalene; polyphenolic compounds such as catechol and resorcinol; and polymers such as phenol resins, polyphenol, and poly(hydroxystyrene).

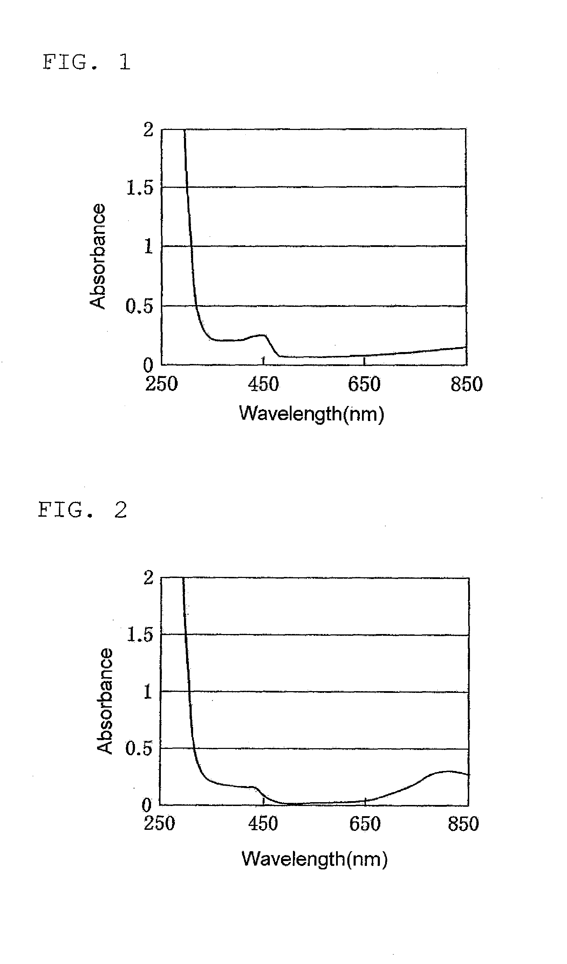

In the composition, the phenolic compound (b) is present as a dopant, not as a solvent. The phenolic compound (b) of being a dopant is supported by the facts that (1) molded articles prepared from the composition containing the phenolic compound (b) have very high electric conductivity as compared with molded articles prepared from a composition not containing the phenolic compound (b) (refer to Examples and Comparative Examples) and (2) as shown in FIGs. 1 and 2, the molded articles prepared from the composition containing the phenolic compound (b) (Example 13) and the molded articles prepared from a polyaniline composition not containing the phenolic compound (b) (Comparative Example 1) after removing an organic solvent show different UV-vis (ultraviolet-visible ray) spectrum differing from each other. It is clear that the phenolic compound (b) remains in the molded articles after removing the solvent. Specifically, if the phenolic compound (b) is a mere solvent, the phenolic compound is easily vaporized and removed by heating when producing a molded article. However, if present as a dopant, the phenolic compound (b) is electrically charged and a great amount of energy is required to remove the phenolic compound from polyaniline. Heating at a temperature normally used for vaporizing a phenolic compound cannot remove such a phenolic compound.

The amount of the phenolic compound (b) added to the composition of the invention is in a range usually from 0.01 to 1,000 mass%, and preferably from 0.5 to 500 mass% for the protonated substituted or unsubstituted polyaniline composite (a).
The molar concentration of the compound (b) having a phenolic hydroxyl group in the total composition is preferably in a range from 0.01 mol/l to 5 mol/l. If the amount of the compound is too small, improvement in electric conductivity may not be achieved. An excessive amount may impair homogeneity of the composition and require a large amount of heat and labor such as working hours for volatilization removal, possibly resulting in formation of a material with impaired transparency and electric characteristics.

In the protonated substituted or unsubstituted polyaniline composite (a) (hereinafter referred to simply as "polyaniline composite") used in the composition, the substituted or unsubstituted polyaniline (hereinafter referred to simply as "polyaniline") is preferably protonated by an organic protonic acid or a salt thereof represented by the following formula (I) (hereinafter referred to as "organic protonic acid (I) or a salt thereof):

M (XARₙ)ₘ (I)

As examples of the substituent for the substituted polyaniline, linear or branched hydrocarbon groups such as a methyl group, ethyl group, hexyl group, and octyl group; alkoxyl groups such as a methoxy group and phenoxy group; aryloxy groups; and halogen-containing hydrocarbon groups such as CF₃ group can be given.

The substituted or unsubstituted polyaniline in the invention is preferably a high molecular weight component having a weight average molecular weight of 10,000 g/mol or more, more preferably 100,000 g/mol or more. The use of such a high molecular weight component can improve strength and ductility of conductive products produced from the composition. A highly conductive product can be obtained when the weight average molecular weight is 10,000 g/mol or more.
The molecular weight of polyaniline is measured by gel permeation chromatography (GPC). Details of measurement will be described in the examples given later.

In the above formula (I), M is a hydrogen atom, or an organic or inorganic cation. As examples of the organic cation, a pyridinium group, imidazolium group, and anilinium group can be given. As examples of the inorganic cation, sodium, lithium, potassium, cerium, and ammonium can be given.
X is an acidic group, for example, an -SO₃⁻ group, - PO₃²⁻ group, -PO₄ (OH)⁻ group, -OPO₃²⁻ group, -OPO₂ (OH)⁻ group, and -COO⁻ group, with the -SO₃⁻ group being preferable.

A is a hydrocarbon group which may be substituted. Examples thereof include linear or branched alkyl groups or alkenyl groups having 1 to 24 carbon atoms, cycloalkyl groups which may be substituted such as cyclopentyl, cyclohexyl, cycloheptyl, cyclooctyl, and menthyl; dicycloalkyl groups or polycycloalkyl groups which may be condensed such as bicyclohexyl, norbornyl, and adamantyl; aryl groups including an aromatic ring which may be substituted such as phenyl, tosyl, thiophenyl, pyrrolinyl, pyridinyl, and furanyl; diaryl groups or polyaryl groups which may be condensed such as naphthyl, anthracenyl, fluorenyl, 1,2,3,4-tetrahydronaphthyl, indanyl, quinolinyl, and indonyl; and alkylaryl groups.

R is independently -R¹, -OR¹, -COR¹, -COOR¹, -CO(COR¹), or -CO(COOR¹). Here, R¹ is a hydrocarbon group with 4 or more carbon atoms which may have a substituent, silyl group, alkylsilyl group, -(R²O)ₓ-R³, or - (OSiR³₂)ₓ-OR³ (wherein R² is an alkylene group, R³s, which may be the same or different, are a hydrocarbon group, and x is an integer of 1 or more). When R¹ is a hydrocarbon group, examples of R¹ include a linear or branched butyl group, pentyl group, hexyl group, heptyl group, octyl group, nonyl group, decyl group, dodecyl, pentadecyl group, and eicosanyl group.
n is an integer of 2 or more and m is a valence of M.

As the compound shown by the formula (I), a dialkylbenzenesulfonic acid, dialkylnaphthalenesulfonic acid, sulfophthalate, and compound shown by the following formula (II) can be preferably used.

M(XCR⁴(CR⁵₂COOR⁶)COOR⁷)ₚ (II)

Like formula (I), M in the above formula (II) is a hydrogen atom, or an organic or inorganic cation. As examples of the organic cation, a pyridinium group, imidazolium group, and anilinium group can be given. As examples of the inorganic cation, sodium, lithium, potassium, cerium, ammonium, or the like can be given.

X is an acidic group, for example, an -SO₃⁻ group, - PO₃²⁻ group, -PO₄(OH)⁻ group, -OPO₃²⁻ group, -OPO₂(OH)⁻ group, and -COO⁻ group, with the -SO₃⁻ group being preferable.

R⁴ and R⁵ are independently a hydrogen atom, hydrocarbon group, or R⁸₃Si- (wherein R⁸ is a hydrocarbon group (three R⁸s may be the same or different)). When R⁴ and R⁵ are hydrocarbon groups, examples of the hydrocarbon groups include a linear or branched alkyl group having 1 to 24 carbon atoms, aryl group including an aromatic ring, or alkylaryl group. When R⁸ is a hydrocarbon group, examples of the hydrocarbon group include the same groups as mentioned for R⁴ and R⁵.

R⁶ and R⁷ are independently a hydrocarbon group or - (R⁹O)_{q}-R¹⁰ (wherein R⁹ is a hydrocarbon group or silylene group, R¹⁰ is a hydrogen atom, hydrocarbon group, or R¹¹₃Si-(wherein R¹¹ is a hydrocarbon group (three R¹¹s may be the same or different)), and q is an integer of 1 or more). When R⁶ and R⁷ are hydrocarbon groups, examples of the hydrocarbon groups include a linear or branched alkyl group having 1 to 24 carbon atoms, preferably 4 or more carbon atoms, aryl group including an aromatic ring, or alkylaryl group. When R⁶ and R⁷ are hydrocarbon groups, specific examples of the hydrocarbon groups include a linear or branched butyl group, pentyl group, hexyl group, octyl group, and decyl group.

In R⁶ and R⁷, when R⁹ is a hydrocarbon group, examples of the hydrocarbon group include a linear or branched alkylene group having 1 to 24 carbon atoms, arylene group including an aromatic ring, alkylarylene group, or arylalkylene group. In R⁶ and R⁷, when R¹⁰ and R¹¹ are hydrocarbon groups, examples of the hydrocarbon groups include the same groups as mentioned for R⁴ and R⁵ can be given. q is preferably 1 to 10.

When R⁶ and R⁷ are groups represented by - (R⁹O)_{q}-R¹⁰, groups shown by the following formulas can be given as specific examples, 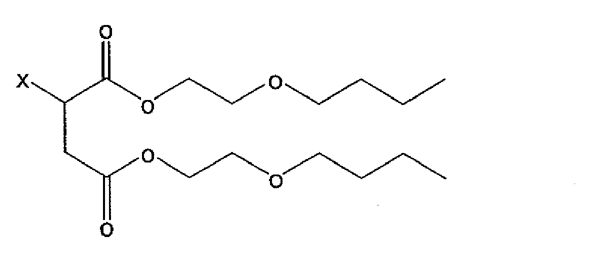 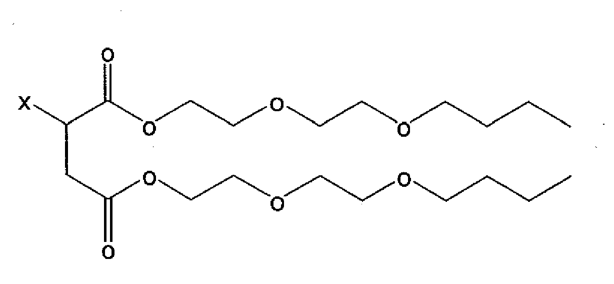 wherein X represents -SO₃ and the like.

p is a valence of M.

It is further preferred that the above organic protonic acid (II) or the salt thereof be a sulfosuccinic acid derivative represented by the following formula (III) (hereinafter referred to as "sulfosuccinic acid derivative (III)").

M (O₃SCH (CH₂COOR¹²) COOR¹³)ₘ (III)

In the above formula (III), M and m are the same as in the above formula (I).

R¹² and R¹³ are independently a hydrocarbon group or - (R¹⁴O)ᵣ-R¹⁵ (wherein R¹⁴ is a hydrocarbon group or silylene group, R¹⁵ is a hydrogen atom , hydrocarbon group, or R¹⁶₃Si- (wherein R¹⁶ is a hydrocarbon group (three R¹⁶s may be the same or different)), and r is an integer of 1 or more).

When R¹² and R¹³ are hydrocarbon groups, examples of the hydrocarbon groups include the same groups as mentioned for R⁶ and R⁷.

In R¹² and R¹³, when R¹⁴ is a hydrocarbon group, the same groups as mentioned for R⁹ can be given as the hydrocarbon group. In R¹² and R¹³, when R¹⁵ and R¹⁶ are hydrocarbon groups, the same groups as mentioned for R⁴ and R⁵ can be given as the hydrocarbon groups.

r is preferably 1 to 10.

When R¹² and R¹³ are groups represented by -(R¹⁴O)ᵣ-R¹⁵, examples thereof include the same groups as mentioned for - (R⁹O)_{q}-R¹⁰ in R⁶ and R⁷.

When R¹² and R¹³ are hydrocarbon groups, examples of the hydrocarbon groups include the same groups as mentioned for R⁶ and R⁷, with a butyl group, hexyl group, 2-ethylhexyl group, decyl group, and the like being preferable.

The above-mentioned organic protonic acid (I) or the salt thereof has a function of protonating polyaniline and is present as a dopant (counteranion) in the polyaniline composite (a). Specifically, two compounds, that is, the organic protonic acid (I) or the salt thereof and the above phenolic compound (b), function as dopants in the composition. The above-mentioned organic protonic acid (I) or the salt thereof appears to be present as a cation in the composition.

Although there are no particular limitations on the ratio of the polyaniline and organic protonic acid (I) or the salt thereof in the polyaniline composite (a), the molar ratio of polyaniline monomer unit/organic protonic acid (I) or the salt thereof is usually 0.1 to 2, and preferably 0.1 to 0.5. If the proportion of the organic protonic acid (I) or the salt thereof is too small, the electric conductivity does not increase. The conductivity also decreases when the proportion thereof is too great, due to a decrease in the proportion of polyaniline which contributes to the electric characteristics of molded articles. Although the weight ratio changes according to the molecular weight of the protonic acid, a protonated substituted or unsubstituted polyaniline composite (a) containing substituted or unsubstituted polyaniline in an amount of 20 to 70 wt% is preferable because of its excellent electric characteristics.

The organic protonic acid (I) or the salt thereof used in the invention can be produced by a known method. For example, a sulfophthalate derivative or sulfosuccinate derivative can be obtained by the reaction of a corresponding sulfophthalic acid derivative or sulfosuccinic acid derivative, and a desired alcohol. In addition, hydrosulfonylating a maleate with sodium hydrogensulfite or the like to produce a corresponding sulfosuccinate derivative is also known.

A commercially available product of organic protonic acid (I) or a salt thereof can also be used. As examples of the commercially available product, Aerosol OT (diisooctyl sodium sulfosuccinate, manufactured by Wako Pure Chemical Industries, Ltd.) and Liparl 870P (manufactured by Lion Corp.) can be given. Although some commercially available products have different purities, appropriate products may be selected as required.

As the organic solvent substantially immiscible with water (hereinafter referred to as "water immiscible organic solvent") used in the composition, hydrocarbon solvents such as benzene, toluene, xylene, ethylbenzene, and tetralin; halogen-containing solvents such as methylene chloride, chloroform, carbon tetrachloride, dichloroethane, trichloroethane, and tetrachloroethane; ester solvents such as ethyl acetate; and the like can be given. Of these, toluene, xylene, chloroform, trichloroethane, ethyl acetate, and the like are preferable.

The polyaniline composite (a) used in the invention is preferably produced by chemical oxidation polymerization.

As a solvent, an acidic aqueous solution and a mixed solvent of a hydrophilic organic solvent and an acidic aqueous solution can be generally used for the chemical oxidation polymerization. In the production of the polyaniline composite (a), an organic solvent which is substantially immiscible with water (water immiscible organic solvent) or a mixed solvent of a water immiscible organic solvent and an acidic aqueous solution can also be used. Use of such a mixed solvent is preferable. As the water immiscible organic solvent, hydrocarbon solvents such as benzene, toluene, xylene, ethylbenzene, and tetralin; halogen-containing solvents such as methylene chloride, chloroform, carbon tetrachloride, dichloroethane, trichloroethane, and tetrachloroethane; ester solvents such as ethyl acetate; and the like can be given. Of these, toluene, xylene, and the like are preferable.

When the mixed solvent of a water immiscible organic solvent and an acidic aqueous solution is used, the polyaniline composite (a) produced by the polymerization reaction is obtained in the state of being dissolved in the water immiscible organic solvent phase, if the organic protonic acid (I) or a salt thereof is present in the mixed solvent during the polymerization of aniline. The polyaniline composite (a) dissolved in the water immiscible organic solvent can be promptly obtained by separating the water phase.

When the polyaniline composite (a) is produced using the mixed solvent of a water immiscible organic solvent and an acidic aqueous solution in the presence of the organic protonic acid (I) or a salt thereof, the organic protonic acid (I) or a salt thereof also functions as a surfactant.

The molar ratio of the organic protonic acid (I) or the salt thereof to the aniline or substituted aniline to be polymerized is usually 0.05 to 1, and preferably 0.1 to 0.5. If the molar ratio of the organic protonic acid (I) or a salt thereof is smaller than 0.05, the polymerization reaction proceeds slowly, whereby a molded article with high conductivity may not be obtained. If the molar ratio is more than 1, it is difficult to separate a water phase after polymerization, whereby a molded article with high conductivity may not be obtained.

Although there are no particular limitation on the chemical oxidization initiator, inorganic compounds, including peroxide salts such as ammonium persulfate, sodium persulfate, and potassium persulfate; ammonium dichromate, ammonium perchlorate, iron (III) potassium sulfate, iron (III) trichloride, manganese dioxide, iodic acid, potassium permanganate, and the like can be used. Compounds that oxidize at room temperature or below are preferable. When a mixed solvent of a water immiscible organic solvent and an acidic aqueous solution is used, it is preferable to use a water-soluble initiator in order to prevent an unreacted initiator from mixing in an organic phase. Preferable examples of the initiator include ammonium persulfate, sodium persulfate, potassium persulfate, and ammonium perchlorate, with ammonium persulfate being particularly preferable.

Although the polymerization reaction conditions are not specifically limited, the reaction temperature is usually from -20°C to 30°C, and preferably 5°C or less.

When the polyaniline composite (a) is produced by chemical oxidation polymerization in a water-immiscible organic solvent, the phenolic compound (b) may be added either in the resulting polyaniline composite (a) dissolved in the water immiscible organic solvent used in the polymerization. Alternatively, after removing the organic solvent from the solution in which the polyaniline composite (a) is dissolved in the organic solvent to obtain a solid polyaniline composite (a), and again dissolving it in a water immiscible organic solvent, the phenolic compound (b) may be added thereto. In this case, the water immiscible organic solvent used for the polymerization and the water immiscible organic solvent used for dissolving the solid polyaniline composite (a) again may be either the same or different.

The polyaniline composite (a) used in the invention can also be produced by chemical oxidation polymerization in an acidic aqueous solution without using the mixed solvent of a water immiscible organic solvent and an acidic aqueous solution. Such a method is widely known in the art. In the method, the polyaniline or polyaniline composite is obtained as precipitates from the aqueous solution. The precipitated product contains a large amount of impurities such as unreacted aniline monomers and oligomers, initiators, and the like. For this reason, the precipitated polyaniline or polyaniline composite must be purified into the state of an emeraldine base by reduction using a base such as ammonia or hydrazine.

A common electrolytic polymerization method can be used for producing the polyaniline composite (a) instead of the chemical oxidation polymerization.

The amount of the polyaniline composite (a) in the water immiscible organic solvent in the composition of the invention is usually 900 g/l or less, and preferably 0.01 to 300 g/l or less, depending on the type of the water immiscible organic solvent. If the amount of polyaniline composite (a) is too large, the composition cannot be maintained as a solution, resulting in difficult handling during fabrication of molded articles, impaired homogeneity of molded articles, and a decrease in electric characteristics, mechanical strength, and transparency of the molded articles.

In order to obtain the composition (conductive polyaniline composition) comprising a polyaniline composite (a) and phenolic compound (b) dissolved in a water immiscible organic solvent, the phenolic compound (b) is added to the solution of the polyaniline composite (a) dissolved in the water immiscible organic solvent obtained in the manner as described above. Specifically, the phenolic compound (b) may be added in a solid state, in a liquid state, or in the state of being dissolved or suspended in a water immiscible or water miscible organic solvent. Preferably, an appropriate solvent is selected and added so that the state of being dissolved in the solvent is maintained after the addition.

Other resin materials and other additives such as inorganic materials, curing agents and plasticizers may be added to the composition according to the application.

Other resin materials are added as a binder material, a plasticizer, a matrix material, or the like. As examples, binder resins and/or curable resin monomers can be given. Specific examples of the binder resin include polyethylene, polypropylene, polystyrene, polyethylene terephthalate, polycarbonate, polyethylene glycol, polyethylene oxide, polyacrylic acid, polyacrylate, polymethacrylate, and polyvinyl alcohol. Specific examples of curable resin monomers include acrylic acid, and acrylic esters such as methyl acrylate, ethyl acrylate, butyl acrylate, and hexyl acrylate, epoxies, phenols, and imides. When another resin material is contained, the composition becomes a conductive composite material. Curable resin monomers can be cured by heating or irradiating with UV rays or an electron beam.

The inorganic material is added to improve, for example, strength, surface hardness, dimensional stability, and other mechanical characteristics. As specific examples, silica (silicon dioxide), titania (titanium oxide), and alumina (aluminium oxide) can be given.

The curing agent is added to improve, for example, strength, surface hardness, dimensional stability, and other mechanical characteristics. As specific examples, heat-curing agents such as a phenol resin, and photo-curing agents such as a composition comprising an acrylate monomer and a photopolymerization initiator can be given.

The plasticizer is added to improve, for example, mechanical characteristics such as tensile strength and bending strength. As specific examples, phthalates and phosphates can be given.

As for the method for producing the polyaniline composite used in the invention and other information, reference can be made to PCT/JP2004/017507.

The conductive polymer multilayer body of the invention can be produced by applying the above composition which contains the polyaniline composite (a) dissolved in the water immiscible organic solvent and the phenolic compound (b) to a substrate having a desirable shape, followed by removal of the water immiscible organic solvent.

In order to remove the water immiscible organic solvent, the substrate is heated to vaporize the organic solvent. As the method for vaporizing the water immiscible organic solvent, for example, the substrate is heated in an air stream of 250°C or less, preferably at 50 to 200°C, if necessary, under reduced pressure. Heating temperature and heating time are not specifically limited and can be appropriately determined according to the material used.

As the method for applying the composition to the substrate, commonly known methods such as a casting method, spraying method, dip coating method, doctor blade method, bar coating method, spin coating method, screen printing method, and gravure printing method can be used.

A synthetic resin to be used as the substrate is normally hydrophobic due to a low surface polarity. In order to apply a conductive material uniformly on the surface of a molded article formed of a synthetic resin, surface treatment such as corona treatment and application of an undercoating agent is required. The polyaniline composition used in the invention not only is homogeneous but also contains a proton acid which has the effect of a surfactant, and hence, can be applied uniformly even to the surface of a substrate having a low polarity. As the substrate having a low polarity surface, polyethylene, polypropylene, polystyrene, syndiotactic polystyrene, cyclic olefin polymers, polyethylene terephthalate, polycarbonate, polysulfone, polyarylate, nylon, triacetyl cellulose or the like can be given.
Due to the homogeneity of the polyaniline composition, a conductive multilayer body with an remarkably high degree of transparency can be obtained therefrom.

In the multilayer body of the invention, a thin film formed of the composition has an appropriate level of conductivity even with a thickness of 1 µm of less, for example. Therefore, the film can be made thin and transparent.

The multilayer body of the invention has a transmittance to entire rays of preferably 80% or more, more preferably 90% or more. The term "entire rays" means rays with a wavelength of 350 to 800 nm. It is preferred that the multilayer body of the invention have the transmittance to rays with a wavelength of 450 nm of 70% or more.

The intrinsic surface resistance of the conductive polymer multilayer body of the invention is preferably 10¹⁰ Ω/□ or less, more preferably 10⁵ Ω/□ or less, and most preferably 10⁴ Ω/□ or less.

The intrinsic conductivity of the molded article of the invention exhibits a significantly high value, i.e. preferably 10 S/cm or higher, more preferably 100 S/cm or higher.

The intrinsic conductivity can be measured by a two-terminal method, four-terminal method, four probe method, Van der Poe method, or the like, after applying the composition of the invention on a glass substrate. Here, the intrinsic conductivity was measured using Loresta GP (a commercially-available resistivity meter using the four probe method, manufactured by Mitsubishi Chemical Corp.).

### EXAMPLES

### <Production Example 1>

### (1) Production of conductive polyaniline composite

144 g of Aerosol OT (sodium diisooctylsulfosuccinate, manufactured by Wako Pure Chemical Industries, Ltd., purity of 75% or more) was dissolved in 4 1 of toluene with stirring. The resulting solution was poured into a 30 1 glass reactor (equipped with a mechanical stirrer, a jacket, a thermometer, and a dropping funnel) under a nitrogen stream, and 150 g of aniline as a raw material was added and dissolved with stirring.
The flask was cooled with stirring using a coolant, and 12 l of 1 N hydrochloric acid aqueous solution was added to the solution.
When the solution temperature was lowered to -3°C, a solution obtained by dissolving 214 g of chemical ammonium persulfate in 4 l of 1 N hydrochloric acid solution was added dropwise from the dropping funnel. The dropwise addition was completed within 3 hours and 10 minutes. Stirring was performed while keeping the internal temperature of the solution at 0°C ± 1°C for 18 hours and 30 minutes after the start of dropwise addition. Then, 8 1 of toluene was added, and after raising the temperature to 19°C, the solution was allowed to stand.
After being allowed to stand, the solution was separated into two phases. The aqueous phase (lower phase) was removed from the lower part of the reactor, whereby a toluene solution of a crude polyaniline composite was obtained.

4 l of ion exchange water was added to the resulting composite solution, stirred, and allowed to stand to separate the aqueous phase. After conducting this operation again, the composite solution was then washed with 4 l of a 1 N hydrochloric aqueous solution, and allowed to stand. Thereafter, the acidic aqueous solution was separated to collect a toluene solution of the polyaniline composite.
A small amount of insoluble matters contained in the composite solution were collected by No. 5C filter paper, whereby a toluene solution of the toluene-soluble polyaniline composite was collected. This solution was transferred to an evaporator, heated in a hot water bath of 60°C under reduced pressure to distill volatile components off by evaporation, thereby to obtain 208 g of a polyaniline composite.

The results of the elementary analysis of the polyaniline composite from which the volatile components were substantially removed are shown below. Carbon: 61.70 wt%, Hydrogen: 8.20 wt%, Nitrogen: 3.90 wt%, Sulfur: 5.50 wt%, Chlorine: 0.12 wt%

From the ratio of the weight percentage of nitrogen based on the raw material aniline and the weight percentage of sulfur based on the sulfosuccinate, the molar fraction of the aniline monomer unit/the sulfosuccinate in this composite was 0.62. The weight average molecular weight of the polyaniline skeleton in this polyaniline composite was 300,000 g/mol.
The molecular weight was measured by gel permeation chromatography (GPC). Specifically, TOSOH TSK-GEL GMHHR-H was used as a column, and the measurement was conducted using a 0.01 M LiBr/N-methylpyrrolidone solution at a temperature of 60°C and a flow rate of 0.35 ml/min. 100 µl of a 0.2 g/l sample solution was poured and detected by irradiating UV rays with a wavelength of 260 nm. As the standard, the average molecular weight was calculated by the PS (polystyrene)-reduced method.

### (2) Production of conductive polyaniline composition

1 g of the polyaniline composite obtained in (1) above was again dissolved in 20 ml of toluene to prepare a homogeneous solution of the conductive polyaniline composite solution. Then, 2 ml of m-cresol was added to obtain a conductive polyaniline composition.

### <Production Example 2>

### (1) Production of conductive polyaniline composite

A1 l glass flask equipped with a mechanical stirrer and a dropping funnel was charged with 100 ml of toluene, and 3.6 g of Aerosol OT (sodium diisooctylsulfosuccinate, manufactured by Wako Pure Chemical Industries, Ltd.) and 3.74 g of aniline (manufactured by Wako Pure Chemical Industries, Ltd.) were dissolved. 300 ml of 1 N hydrochloric acid solution was added to the solution with stirring and the flask was cooled in an ice water bath. A solution obtained by dissolving 5.36 g of ammonium persulfate in 100 ml of 1 N hydrochloric acid solution was added dropwise from the dropping funnel to initiate polymerization of aniline. The polymerization reaction was carried out while cooling the flask in an ice water bath, and was stopped after 18 hours. The reaction solution was transferred into a separating funnel. Of the resulting two layers, the aqueous phase was discharged and the toluene organic layer was washed twice with ion-exchanged water and twice with 1 N hydrochloric acid solution. Volatile components (organic solvent) were distilled off from the toluene solution under reduced pressure, thereby obtaining a solid protonated polyaniline composite.

The polyaniline composite obtained was again dissolved in toluene to prepare a toluene solution containing the polyaniline composite at a concentration of 50 g/l. 5 ml of this solution was mixed with 10 ml of 1 N sodium hydroxide aqueous solution and contacted each other to precipitate non-conductive polyaniline (in the state of a so-called emeraldine base) which is undissolvable in both solutions. This non-conductive polyaniline was collected by filtration and dried. As a result of GPC measurement using an NMP solvent, it was found that the polyaniline had a PS-reduced weight average molecular weight of as extremely high as 614,000 g/mol.

### (2) Production of conductive polyaniline composition

The polyaniline composite obtained in (1) above was again dissolved in toluene to prepare a toluene solution containing the polyaniline composite at a concentration of 50 g/1. 1 mmol of m-cresol was added to 1 ml of this toluene solution to obtain a conductive polyaniline composition with an m-cresol concentration of about 0.9 mol/l.

### <Production Example 3>

### (1) Production of conductive polyaniline composite

144 g of Aerosol OT (sodium diisooctylsulfosuccinate, manufactured by Wako Pure Chemical Industries, Ltd., purity of 75% or more) was dissolved in 4 l of toluene with stirring. The resulting solution was poured into a 30 1 glass reactor (equipped with a mechanical stirrer, a jacket, a thermometer, and a dropping funnel) under a nitrogen stream, and 150 g of aniline as a raw material was added and dissolved with stirring.
The flask was cooled with stirring using a coolant, and 12 l of 1 N hydrochloric acid solution was added to the solution.
When the solution temperature was lowered to 3°C, a solution obtained by dissolving 292 g of chemical ammonium persulfate in 4 l of 1 N hydrochloric acid solution was added dropwise from the dropping funnel. The dropwise addition was completed within 3 hours and 10 minutes. Stirring was performed while keeping the internal temperature of the solution at 5°C ± 1°C for 18 hours after the start of dropwise addition. Then, 8 l of toluene was added, and after raising the temperature to 20°C, the solution was allowed to stand.
After being allowed to stand, the solution was separated into two phases. The aqueous phase (lower phase) was removed from the lower part of the reactor, whereby a toluene solution of a crude polyaniline composite was obtained.

4 1 of ion exchange water was added to the resulting composite solution, stirred, and allowed to stand to separate the aqueous phase. After conducting this operation again, the composite solution was washed then with 4 l of a 1 N hydrochloric aqueous solution, and allowed to stand. Thereafter, the acidic aqueous solution was separated to collect a toluene solution of the polyaniline composite.
A small amount of insoluble matters contained in the composite solution were removed by No. 5C filter paper, whereby a toluene solution of the toluene-soluble polyaniline composite was collected. This solution was transferred to an evaporator, heated in a hot water bath of 60°C under reduced pressure to distill volatile components off by evaporation, whereby 125 g of a polyaniline composite was obtained.

The results of the elementary analysis of the polyaniline composite from which the volatile components were substantially removed are shown below. Carbon: 61.4 wt%, Hydrogen: 8.30 wt%, Nitrogen: 3.80 wt%, Sulfur: 5.70 wt%, Chlorine: 0.11 wt%

From the ratio of the weight percentage of nitrogen based on the raw material aniline and the weight percentage of sulfur based on the sulfosuccinate, the molar fraction of the aniline monomer unit/the sulfosuccinate was 0.66. The weight average molecular weight of the polyaniline skeleton in this polyaniline composite was 7,8000 g/mol.

### (2) Production of conductive polyaniline composition

1 g of the polyaniline composite obtained in (1) above was again dissolved in 20 ml of toluene to prepare a homogeneous conductive polyaniline composite solution. Then, 2 ml of m-cresol was added to obtain a conductive polyaniline composition.

### <Example 1>

39 ml of toluene was added to 10 ml of the conductive polyaniline composition obtained in Production Example 1 to prepare a conductive polyaniline composition at a concentration of 10 g/l. About 2 ml of the resultant composition was applied to one surface of a polyethylene terephthalate film (A5 size, 105 µm in thickness, Lumilar T100 manufactured by Toray Industries, Inc.), followed by bar coating using a No. 12 bar. Drying was performed for 30 seconds in an air stream of 75°C, whereby a conductive multilayer film with a 48 nm thick thin film was obtained.
The conductive multilayer film had a transmittance to entire rays of 86% (the substrate itself had a transmittance to entire rays of 89%), and an intrinsic surface resistivity of 830 Ω/□.

### [Method for measuring transmittance to entire rays]

The transmittance to entire rays was measured according to JIS K7105 using a haze meter having a tungsten lamp 7027 as a light source (manufactured by Nippon Denshoku Industries Co., Ltd., Model: NDH (optical part), 300A (measuring part)).

### [Method for measuring intrinsic surface resistivity]

Intrinsic surface resistivity was measured by the five-point measuring method according to JIS K 7194 using Loresta GP (a resistivity meter using the four probe method, manufactured by Mitsubishi Chemical Corp.).

### <Example 2>

A conductive multilayer film was obtained in the same manner as in Example 1, except that a No. 4 bar was used instead of the No. 12 bar. The resulting conductive multilayer film had a transmittance to entire rays of 87.4% and an intrinsic surface resistivity of 4.4 kΩ/□.

### <Example 3>

A conductive multilayer film was obtained in the same manner as in Example 2, except that toluene was added to the composition used in Example 1 so that the concentration was reduced to half, and the diluted composition was used.
The resulting conductive multilayer film had a transmittance to entire rays of 88.1% and an intrinsic surface resistivity of 13.4 kΩ/□.

### <Example 4>

About 2 ml of the composition used in Example 1 was applied to one surface of a polypropylene film (A5 size, 300 µm in thickness, "Superpurelay", manufactured by Idemitsu Unitec, Co., Ltd.), followed by bar coating using a No. 12 bar. Drying was performed for 30 seconds in an air stream of 75°C, whereby a conductive multilayer film with a 45 nm thick thin film was obtained.
The resulting conductive multilayer film had a transmittance to entire rays of 88.8% (the substrate itself had a transmittance to entire rays of 92.3%), and an intrinsic surface resistivity of 860 Ω/□.

### <Example 5>

A conductive multilayer film was obtained in the same manner as in Example 4, except that a No. 4 bar was used instead of the No. 12 bar.
The resulting conductive multilayer film had a transmittance to entire rays of 90.2%, and an intrinsic surface resistivity of 4.4 kΩ/□.

### <Example 6>

A conductive multilayer film was obtained in the same manner as in Example 5, except that toluene was added to the composition used in Example 1 so that the concentration was reduced to half, and the diluted composition was used.
The resulting conductive multilayer film had a transmittance to entire rays of 91.1% and an intrinsic surface resistivity of 21.4 kΩ/□.

### <Example 7>

About 2 ml of the composition used in Example 1 was applied to one surface of a triacetyl cellulose film (A5 size, manufactured by Fujifilm Corporation), followed by bar coating using a No. 12 bar. Drying was performed for 30 seconds in an air stream of 75°C, whereby a conductive multilayer film with a 52 nm thick thin film was obtained.
The resulting conductive multilayer film had a transmittance to entire rays of 89.7% (the substrate itself had a transmittance to entire rays of 93.3%), and an intrinsic surface resistivity of 5.5 kΩ/□.

### <Example 8>

A conductive multilayer film was obtained in the same manner as in Example 7, except that a No. 4 bar was used instead of the No. 12 bar.
The resulting conductive multilayer film had a transmittance to entire rays of 90.7%, and an intrinsic surface resistivity of 35.5 k Ω/□.

### <Example 9>

A conductive multilayer film was obtained in the same manner as in Example 7, except that toluene was added to the composition used in Example 1 so that the concentration was reduced to half, and the diluted composition was used.
The resulting conductive multilayer film had a transmittance to entire rays of 91.8% and an intrinsic surface resistivity of 86.1 kΩ/□.

### <Example 10>

About 2 ml of the composition used in Example 1 was applied to one surface of a polyethylene terephthalate film which had been surface treated to facilitate adhesion (A5 size, Cosmoshine A4300, manufactured by Toyobo Co., Ltd.), followed by bar coating using a No. 12 bar. Drying was performed for 30 seconds in an air stream of 75°C, whereby a conductive multilayer film with a 50 nm thick thin film was obtained.
The conductive multilayer film had a transmittance to entire rays of 87.7% (the substrate itself had a transmittance to entire rays of 91.6%), and an intrinsic surface resistivity of 2.6 kΩ/□.

### <Example 11>

A conductive multilayer film was obtained in the same manner as in Example 10, except that a No. 4 bar was used instead of the No. 12 bar.
The resulting conductive multilayer film had a transmittance to entire rays of 90.7%, and an intrinsic surface resistivity of 65.1 kΩ/□.

### <Example 12>

A conductive multilayer film was obtained in the same manner as in Example 10, except that toluene was added to the composition used in Example 1 so that the concentration was reduced to half, and the diluted composition was used.
The resulting conductive multilayer film had a transmittance to entire rays of 91.0% and an intrinsic surface resistivity of 1.5 MΩ/□.

### <Example 13>

The conductive polyaniline composition produced in Production Example 2 was diluted by twice with toluene. Several ml of the resulting solution with a concentration of 25 g/l was applied to a 5 cm x 5 cm glass substrate, followed by spin coating at 1,000 rpm for one minute, and dried in an air stream at 120°C for 10 minutes. The thin film of the coated glass had a thickness of 50 nm and had an intrinsic surface resistivity of 1.19 kΩ/□, indicating that the film had a significantly high electric conductivity. A UV-vis (ultraviolet light-visible ray) spectrum of the thin film on this glass substrate is shown in FIG. 1. The spectrum shows that the thin film had a transmittance to rays with a wavelength of 450 nm of 76%.

### <Example 14>

0.1 g of Lackskin (polyacrylate binder manufactured by Seiko Chemicals Co., Ltd.) was added to the conductive polyaniline composition obtained in Production Example 3(2), and toluene was added to give the total amount of 50 ml, whereby a conductive polyaniline composition was obtained at a concentration of 20 g/l (Lackskin: 2 g/l). About 1 ml of this composition was applied to one surface of a polyethylene terephthalate film (A5 size, 105 µm in thickness, Lumilar T100 manufactured by Toray Industries, Inc.), followed by bar coating using a No. 0 bar (14 µm in wet thickness, manufactured by Matsuo Sangyo, Co., Ltd.). Drying was performed for 30 seconds in an air stream of 75°C, whereby a conductive multilayer film with a 100 nm thick thin film was obtained.
The conductive multilayer film had a transmittance to entire rays of 86.1% (the substrate itself had a transmittance to entire rays of 89%), and an intrinsic surface resistivity of 3.3 kΩ/□.

### Example 15

15 ml of toluene was added to 5 ml of the composition prepared in Example 14 to obtain a conductive polyaniline composition at a concentration of 5 g/l (lackskin: 0.5 g/l). About 1 ml of this composition was applied to one surface of a polyethylene terephthalate film (A5 size, 105 µm in thickness, Lumilar T100 manufactured by Toray Industries, Inc.), followed by bar coating using a No. 2 bar (12 µm in wet thickness, manufactured by Matsuo Sangyo, Co., Ltd.). Drying was performed for 30 seconds in an air stream of 75°C, whereby a conductive multilayer film with a 30 nm thick thin film was obtained.
The conductive multilayer film had a transmittance to entire rays of 87.0% (the substrate itself had a transmittance to entire rays of 89%), and an intrinsic surface resistivity of 7.1 kΩ/□.

### <Example 16>

0.5 g of Lackskin (polyacrylate binder manufactured by Seiko Chemicals Co., Ltd.) was added to the conductive polyaniline composition obtained in Production Example 3(2), and toluene was added to give the total amount of 50 ml, whereby a conductive polyaniline composition was obtained at a concentration of 20 g/l (Lackskin: 10 g/l). About 1 ml of this composition was applied to one surface of a polyethylene terephthalate film (A5 size, 105 µm in thickness, Lumilar T100 manufactured by Toray Industries, Inc.), followed by bar coating using a No. 0 bar (4 µm in wet thickness, manufactured by Matsuo Sangyo, Co., Ltd.). Drying was performed for 30 seconds in an air stream of 75°C, whereby a conductive multilayer film with a 100 nm thick thin film was obtained.
The conductive multilayer film had a transmittance to entire rays of 86.8% (the substrate itself had a transmittance to entire rays of 89%), and an intrinsic surface resistivity of 5.8 kΩ/□.

### <Example 17>

15 ml of toluene was added to 5 ml of the composition prepared in Example 16 to obtain a conductive polyaniline composition at a concentration of 5 g/l (lackskin: 2.5 g/l). About 1 ml of this composition was applied to one surface of a polyethylene terephthalate film (A5 size, 105 µm in thickness, Lumilar T100 manufactured by Toray Industries, Inc.), followed by bar coating using a No. 2 bar (12 µm in wet thickness, manufactured by Matsuo Sangyo, Co., Ltd.). Drying was performed for 30 seconds in an air stream of 75°C, whereby a conductive multilayer film with a 50 nm thick thin film was obtained.
The conductive multilayer film had a transmittance to entire rays of 87.6% (the substrate itself had a transmittance to entire rays of 89%), and an intrinsic surface resistivity of 56 kΩ/□.

### <Comparative Example 1>

A coated glass substrate was prepared in the same manner as in Example 13, except that a composition solution which was obtained by diluting twice with toluene the composition prepared without adding m-cresol in Production Example 2(2) was used. The thin film formed on the glass substrate had a thickness of 48 nm and had an extremely high intrinsic surface resistivity of 78.0 MΩ/□, indicating the thin film had a low electric conductivity. When the coated glass substrate was dipped in toluene, the thin film was readily peeled off and eluted. The fact suggested that this thin film was low in resistance to solvent. An UV-vis spectrum of the thin film formed on this glass substrate is shown in FIG. 2.

Comparing FIG. 1 with FIG. 2, the thin film obtained from the composition containing m-cresol (FIG. 1) had a weaker absorption in the vicinity of 800 nm than the thin film obtained from the composition containing no m-cresol (FIG. 2). In addition, the thin film obtained from the composition containing m-cresol had an absorption at around 450 nm. These results explicitly demonstrate that the thin film obtained from the composition containing m-cresol (phenolic compound (b))and the thin film obtained from the composition containing no m-cresol had different characteristics, which indicates m-cresol (phenolic compound (b)) was present as a dopant in the thin film.

### <Comparative Example 2>

The conductive polyaniline composition obtained in Production Example 1 was applied onto an area of 15 mm x 50 mm on a glass substrate, and dried in an air stream at 80°C for 30 minutes, whereby a conductive multilayer film with 35 µm thick thin film was formed.
The conductive multilayer film had an intrinsic surface resistivity of 1.2 Ω/□ and a transmittance to entire rays of 0%.

### INDUSTRIAL APPLICABILITY

The conductive polymer multilayer body of the invention can be used for films, sheets, fibers, fabrics, plastic molded articles which are excellent in antistatic property and conductivity. Specific examples include transparent conductive films used in touch panels, electrodes of organic or inorganic electroluminescent devices, electromagnetic shielding materials or films/sheets, antistatic products or conductivity-imparting products for industrial films for LCDs or the like, antistatic products or conductivity-imparting products for packaging films for carrier tapes, trays, magazines, IC/LSI packages, substrate films for photographs, magnetic films, antistatic fibers, conductive fibers, conductive rolls, and the like.

## Claims

1. A conductive polymer multilayer body comprising a substrate and a thin film provided thereon with a thickness of 1 µm or less which is formed of a conductive polyaniline composition containing a protonated substituted or unsubstituted polyaniline composite (a) dissolved in an organic solvent which is substantially immiscible with water and a compound having a phenolic hydroxyl group (b).

2. A conductive polymer multilayer body comprising a substrate having a surface with a low polarity and a thin film provided thereon with a thickness of 1 µm or less which is formed of a conductive polyaniline composition containing a protonated substituted or unsubstituted polyaniline composite (a) dissolved in an organic solvent which is substantially immiscible with water and a compound having a phenolic hydroxyl group (b).

3. The conductive polymer multilayer body according to claim 1 or 2 which has an intrinsic surface resistance of 10¹⁰ Ω/□ or less.

4. The conductive polymer multilayer body according to claim 3 which has an intrinsic surface resistance of 10⁵ Ω/□ or less.

5. The conductive polymer multilayer body according to any one of claims 1 to 4 which has a transmittance to entire rays of 80% or more.

6. The conductive multilayer body according to any one of claims 1 to 5, wherein the conductive polyaniline composition contains a binder resin and/or a curable resin monomer.
